# EUROPEAN PATENT APPLICATION

(11) **EP 3 515 089 A1**
(43) Date of publication of application: **24.07.2019**
(21) Application number: 16916002.5
(22) Date of filing: 14.09.2016
(51) Int. Cl.: H04R 1/10, G06F 3/041

(54) **EARPHONE ASSEMBLY, AND HEADPHONE AND HEAD-MOUNTED DISPLAY DEVICE WITH EARPHONE ASSEMBLY**

(71) Applicant: Shenzhen Royole Technologies Co., Ltd., Shenzhen, Guangdong 518172 (CN)
(72) Inventor: CHEN, Chen, Shenzhen Guangdong 518052 (CN); SHI, Yijun, Shenzhen Guangdong 518052 (CN)
(74) Representative: Mewburn Ellis LLP
(86) International application number: PCT/CN2016/099100
(87) International publication number: WO 2018/049617

(57) **Abstract**

The present disclosure provides an earphone assembly (11), a headset (10) having the earphone assembly (11), and a head mounted display device (1). The earphone assembly (11) includes a left ear cover (111) and a right ear cover (112). The left ear cover (111) or/and the right ear cover (112) includes a touch assembly (116) disposed thereon. The touch assembly (116) includes a first touch member (117) and a second touch member (118). The second touch member (118) is disposed around a periphery of the first touch member (117). The first touch member (117) is configured to receive a touch operation of a user to input a first type touch instruction to the earphone assembly (11). The second touch member (118) is configured to receive a touch operation of the user to input a second type touch instruction to the earphone assembly (11). The first type touch instruction is different from the second type touch instruction. In this way, the touch assembly can save physical buttons provided on the earphone assembly, which increases the aesthetic of the earphone and is convenient for the user to operate.

## Description

### TECHNICAL FIELD

The present disclosure relates to audio playback devices, and more particularly relates to an earphone assembly, a headset having the earphone assembly, and a head mounted display device.

### BACKGROUND

Headsets are more and more popular due to their sound quality and fidelity. The existing earphone generally includes two ear covers, a headband connecting the two ear covers, and a control portion. The ear covers are usually provided with physical buttons or physical rotary switches. Users can adjust the volume of the headsets or control song playback through the physical buttons or the physical rotary switches.

However, setting physical buttons or rotary switches on the headset seriously affects the aesthetics of the headset. In addition, these physical buttons or rotary switches are usually designed to be too small to be easily operated for the user.

### SUMMARY

Embodiments of the present disclosure provide an earphone assembly, a headset having the earphone assembly, and a head mounted display device, which solves the above problems.

To achieve the above object, the present disclosure provides an earphone assembly. The earphone assembly includes a left ear cover and a right ear cover. The left ear cover or/and the right ear cover includes a touch assembly disposed thereon. The touch assembly includes a first touch member and a second touch member. The second touch member is disposed around a periphery of the first touch member. The first touch member receives a touch operation of a user to input a first type touch instruction to the headset assembly. The second touch member receives a touch operation of the user to input a second type touch instruction to the headset assembly. The first type touch instruction is different from the second type touch instruction.

Furthermore, the first type touch instruction is configured to control playback of an audio file by the earphone assembly, and the second type touch instruction is configured to adjust a volume of the earphone assembly.

Furthermore, the earphone assembly further includes a shell. The shell includes a circular hole defined therein. The first touch member is disposed in the circular hole of the shell to be exposed out of the shell, and the second touch member is covered in the shell.

Furthermore, touch electrodes of the first touch member are arranged more densely than touch electrodes of the second touch member.

Furthermore, the first touch member is circular in shape, the second touch member is annular in shape, and the first touch member is concentric with the second touch member.

Furthermore, the earphone assembly further includes a head mounted member connecting the left ear cover and the right ear cover.

To achieve the above object, the present disclosure further provides a headset. The headset includes a left ear cover, a right ear cover, and a head mounted member connecting the left ear cover and the right ear cover. The left ear cover or/and the right ear cover includes a touch assembly disposed thereon. The touch assembly includes a first touch member and a second touch member. The second touch member is disposed around a periphery of the first touch member. The first touch member receives a touch operation of a user to input a first type touch instruction to the headset assembly. The second touch member receives a touch operation of the user to input a second type touch instruction to the headset assembly. The first type touch instruction is different from the second type touch instruction.

Furthermore, the first type touch instruction is configured to control playback of an audio file by the earphone assembly headset, and the second type touch instruction is configured to adjust a volume of the earphone assembly headset.

Furthermore, touch electrodes of the first touch member are arranged more densely than touch electrodes of the second touch member.

Furthermore, the first touch member is circular in shape, the second touch member is annular in shape, and the first touch member is concentric with the second touch member.

To achieve the above object, the present disclosure further provides a head mounted display device. The head mounted display device includes a headset and a display apparatus rotatably coupling to the headset and configured to display multimedia information. The headset is configured to output audio information. The headset includes a left ear cover, a right ear cover, and a head mounted member connecting the left ear cover and the right ear cover. The left ear cover or/and the right ear cover includes a touch assembly disposed thereon. The touch assembly includes a first touch member and a second touch member. The second touch member is disposed around a periphery of the first touch member. The first touch member receives a touch operation of a user to input a first type touch instruction to the headset assembly. The second touch member receives a touch operation of the user to input a second type touch instruction to the headset assembly. The first type touch instruction is different from the second type touch instruction.

Furthermore, the first type touch instruction is configured to control playback of an audio file by the earphone assembly, and the second type touch instruction is configured to adjust a volume of the earphone assembly.

Furthermore, touch electrodes of the first touch member are arranged more densely than touch electrodes of the second touch member.

Furthermore, the first touch member is circular in shape, the second touch member is annular in shape, and the first touch member is concentric with the second touch member.

Compared with related arts, the earphone assembly, the headset having the earphone assembly, and the head mounted display device provided by the present invention include the touch assembly disposed thereon and the user can control the headset and the earphone assembly by touching the touch assembly. In this way, physical buttons can be omitted on the headset and the earphone assembly, which is not only convenient for the user to use, but also improves the aesthetics of the headset and the earphone assembly.

### BRIEF DESCRIPTION OF THE DRAWINGS

The following companying drawings are used to describe various embodiments of the present disclosure in detail in conjunction with the specific embodiments. It should be understood that the various elements illustrated in the companying drawings are not intended to represent actual size and proportions, and are merely schematic representations for clarity of explanation, and should not be construed as limiting the present disclosure.
FIG. 1 is a schematic structural view of a head mounted display device according to an embodiment of the present disclosure.
FIG. 2 is a schematic exploded view of the head mounted display device illustrated in FIG. 1.
FIG. 3 is a schematic exploded view of a headset of the head mounted display device.
FIG. 4 is a schematic exploded view of a headset of the head mounted display device, but viewed from another aspect.

The present disclosure will be further described in detail below with reference to the accompanying drawings.

### DETAILED DESCRIPTION OF ILLUSTRATED EMBODIMENTS

To more clearly illustrate the objects, the technical solutions and the advantages in the embodiments of the present disclosure, the companying drawings to be used in the embodiments will be briefly described below. It is understood that the specific embodiments described herein are merely illustrative of the present disclosure and are not intended to limit the present disclosure. Furthermore, what are illustrated does not represent the actual proportional relationship of the elements of the present disclosure, and is merely illustrative.

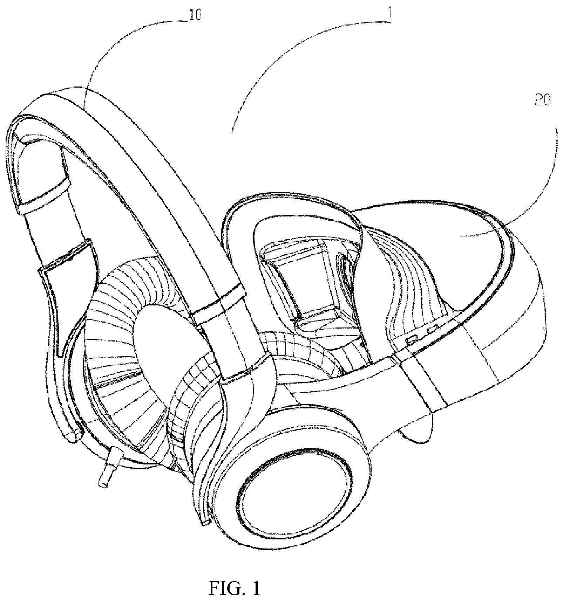

FIG. 1 illustrates a head mounted display device 1 according to an embodiment of the present disclosure. The head mounted display device 1 includes a headset 10 and a display apparatus 20. The headset 10 is configured to output audio information. The display apparatus 20 is configured to display multimedia information, such as video file, image, picture, and so on. In the embodiment, the display apparatus 20 may be rotatably coupled to the headset 10. In this way, a user may conveniently adjust an angle between the headset 10 and the display apparatus 20 of the head mounted display device 1 according to his/her need.

Furthermore, the display apparatus 20 may be received in a receiving space defined by the headset 10, that is, the display apparatus 20 and the headset 10 may be able to be folded together. In this way, the head mounted display device 1 is conveniently accommodated by the user when the head mounted display device 1 is not in use. The user may also watch 3D video or play a virtual reality game or the like through the head mounted display device 1.

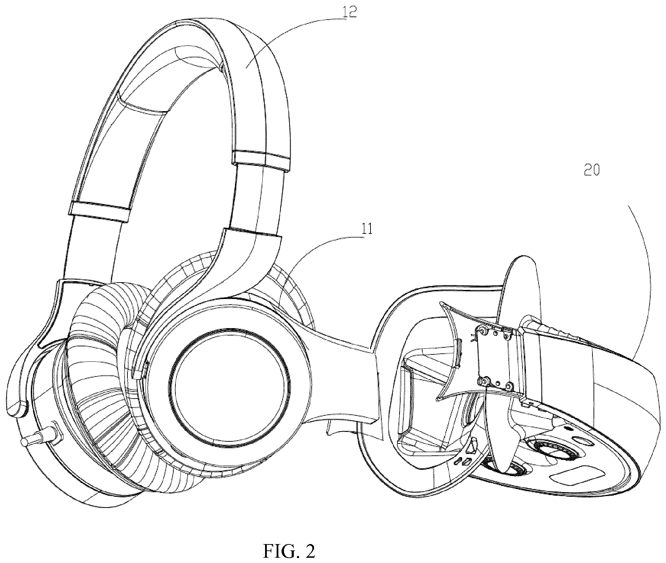

FIG. 2 illustrates an exploded view of the head mounted display device 1. The headset 10 includes an earphone assembly 11 and a head mounted member 12. The head mounted member 12 is coupled to the earphone assembly 11 and allows the headset 10 to be worn on a user's head. In the embodiment, the head mounted member has an arc shape and is made of plastic material.

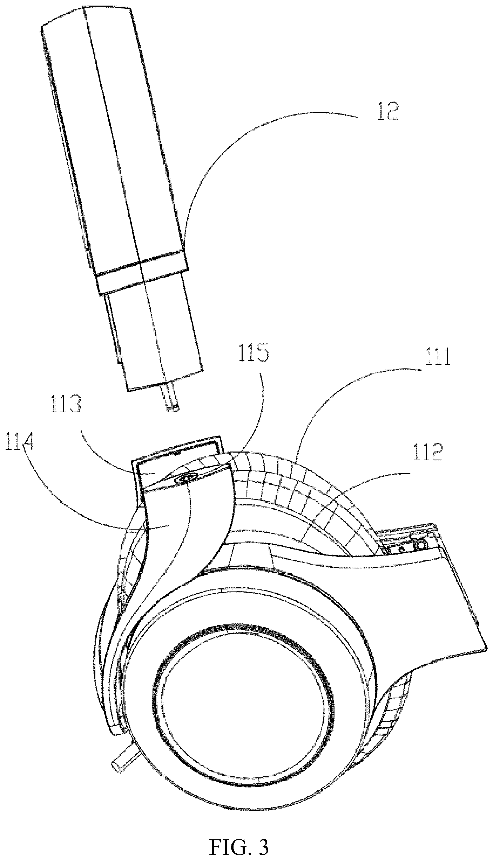

As illustrated in FIG. 3, the earphone assembly 11 includes a left ear cover 111 and a right ear cover 112. The head mounted member 12 is coupled to the left ear cover 111 and the right ear cover 112. In the embodiment, the left ear cover 111 includes an end portion 113, and the right ear cover 112 includes an end portion 114 corresponding to the end portion 113. The head mounted member 12 is slidably coupled to the end portion 113 and the end portion 114. Specifically, the end portions 113 and the end portion 114 each include a hole 115 defined therein for receiving two distal ends of the head mounted member 12 therein. Both distal ends of the head mounted member 12 are slidably received in the holes 115, respectively. In this way, a length of the head mounted member 12 is adjustable, which is convenient for the user to adjust according to his/her need. It may be understood that display apparatus 20 may employ a similar design to the earphone assembly 11 such that a length of the display apparatus 20 may also be adjusted as needed.

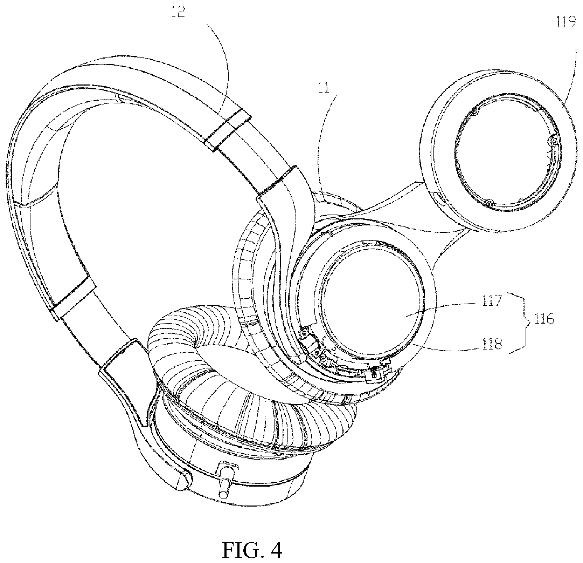

As illustrated in FIG. 4, the earphone assembly 11 includes at least one touch assembly 116. In the embodiment, the touch assembly 116 is disposed on the left ear cover 111 or the right ear cover 112. In other embodiments, the touch assembly 116 may be disposed on the left ear cover 111 and the right ear cover 112. Specifically, the touch assembly 116 is disposed at the lateral side of the left ear cover 111 or the right ear cover 112, which facilitates user's operation.

The touch assembly 116 includes a first touch member 117 and a second touch member 118. The second touch member 118 is disposed around a periphery of the first touch member 117. In the embodiment, the first touch member 117 is circular in shape, and the second touch member 118 is annular in shape. In one embodiment, the first touch member 117 is concentric with the second touch member 118. In another embodiment, the first touch member 117 is non-concentric with the second touch member 118. In another embodiment, the first touch member 117 is circular in shape, the second touch member 118 is square or rectangular in shape, and the first touch member 117 is an inscribed circle of the second touch member 118. In still another embodiment, the first touch member 117 is rectangular or square in shape, the second touch member 118 is circular in shape, and the second touch member 118 is a circumscribed circle of the first touch member 117. It can be understood that the first touch member 117 and the second touch member 118 may both be rectangular or square in shape.

The first touch member 117 is configured to receive a touch operation of the user to input a first type touch instruction to the headset assembly 11. The second touch member 118 is configured to receive a touch operation of the user to input a second type touch instruction to the headset assembly 11. The first type touch instruction is different from the second type touch instruction.

In the embodiment, the first type touch instruction is configured to controlplayback of an audio file by the headset assembly 11, such as a pause, a forward, a backward, a switch, and the like. The switch refers to entering the next audio file from the current audio file, returning to the last played audio file, or selecting an audio file before the current audio file. The pause refers to stopping playing the audio file currently being played. The forward refers to controlling the play progress to go forward. The backward refers to controlling the playback progress to go backward.

In the embodiment, the second type touch instruction is configured to adjust a volume of the headset assembly 11. Specifically, the headset assembly 11 may control the volume to increase or decrease according to a direction of the user touching the second touch member 118. For example, a clockwise touch operation is configured to increase the volume of the headset assembly 11 and a counterclockwise touch operation is configured to decrease the volume of the headset assembly 11. At the same time, the amount of the volume adjustment is related to a distance that the user slides during the touch operation. For example, the longer the distance that the user slides during the touch operation, the larger the amount of the volume adjustment. Furthermore, the first touch member 117 receives more touch commands than the second touch member 118. Therefore, touch electrodes of the first touch member 117 are arranged more densely than touch electrodes of the second touch member 118. In this way, the cost of the entire head mounted display device 1 may be saved.

In another embodiment, the first type control instruction is further configured to control a video file displayed by the display apparatus 20 to perform operations such as performing pause, forward, backward, switch, and the like.

The earphone assembly 11 further includes a shell 119. The shell 119 includes a circular hole defined therein. The first touch member 117 is disposed in the circular hole of the shell 119. Thus, first touch member 117 is exposed out of the shell 119. The second touch member 118 is disposed under the shell 119, that is, the second touch member 118 is covered in the shell 119.

It can be understood that the earphone assembly 11 further includes a microprocessor (not illustrated). The microprocessor may recognize an operation applied to the first touch member 117 and the second touch member 118 by the user and produces corresponding instructions, and controls an application to perform operations corresponding to the instructions, such as controlling the volume of the audio file played, and controlling the playback of the audio file by the headset assembly 11, and the like.

Compared with related arts, the earphone assembly, the headset having the earphone assembly, and the head mounted display device provided by the present invention include the touch assembly disposed thereon and the user can control the headset and the earphone assembly by touching the touch assembly. The touch assembly is not only convenient for the user to use, but also improves the aesthetics of the headset and the earphone assembly.

The above are only the preferred embodiments of the present disclosure and are not intended to limit the present disclosure. Any improvements and modifications without departing from the principles of the present disclosure and made by those skilled in the art are intended to be included in the scope of the present disclosure.

## Claims

1. An earphone assembly, comprising:
a left ear cover;
a right ear cover; and
a touch assembly disposed on at least one selected from a group consisting the left ear cover and the right ear cover, the touch assembly comprising:
a first touch member receiving a touch operation of a user to input a first type touch instruction to the headset assembly; and
a second touch member disposed around a periphery of the first touch member, the second touch member receiving a touch operation of the user to input a second type touch instruction to the headset assembly, and the first type touch instruction is different from the second type touch instruction.

2. The earphone assembly of claim 1, wherein the first type touch instruction is configured to send a control instruction to the earphone assembly to control playback of an audio file, and the second type touch instruction is configured to adjust a volume of the earphone assembly.

3. The earphone assembly of claim 2, wherein the earphone assembly further comprises a shell, the shell comprises a circular hole defined therein, the first touch member is disposed in the circular hole of the shell to be exposed out of the shell, and the second touch member is covered in the shell.

4. The earphone assembly of claim 2, wherein touch electrodes of the first touch member are arranged more densely than touch electrodes of the second touch member.

5. The earphone assembly of claim 1, wherein the first touch member is circular in shape, the second touch member is annular in shape, and the first touch member is concentric with the second touch member.

6. The earphone assembly of claim 1, wherein the earphone assembly further comprises a head mounted member connecting the left ear cover and the right ear cover.

7. A headset, comprising:
a left ear cover;
a right ear cover;
a head mounted member connecting the left ear cover and the right ear cover; and
a touch assembly disposed on at least one selected from a group consisting the left ear cover and the right ear cover, the touch assembly comprising:
a first touch member configured to receive a touch operation of a user to input a first type touch instruction to the headset assembly; and
a second touch member disposed around a periphery of the first touch member, the second touch member configured to receive a touch operation of the user to input a second type touch instruction to the headset assembly, and the first type touch instruction is different from the second type touch instruction.

8. The headset of claim 7, wherein the first type touch instruction is configured to control playback of an audio file by the earphone assembly, and the second type touch instruction is configured to adjust a volume of the earphone assembly.

9. The headset of claim 8, wherein touch electrodes of the first touch member is arranged more densely than touch electrodes of the second touch member.

10. The headset of claim 7, wherein the first touch member is circular in shape, the second touch member is annular in shape, and the first touch member is concentric with the second touch member.

11. A head mounted display device, comprising:
a headset configured to output audio information,
a left ear cover;
a right ear cover;
a head mounted member connecting the left ear cover and the right ear cover; and
a touch assembly disposed on at least one selected from a group consisting the left ear cover and the right ear cover, the touch assembly comprising:
a first touch member receiving a touch operation of a user to input a first type touch instruction to the headset assembly; and
a second touch member disposed around a periphery of the first touch member, the second touch member receiving a touch operation of the user to input a second type touch instruction to the headset assembly, and the first type touch instruction is different from the second type touch instruction; and
a display apparatus rotatably coupling to the headset and configured to display multimedia information.

12. The head mounted display device of claim 11, wherein the first type touch instruction is configured to control playback of an audio file by the earphone assembly, and the second type touch instruction is configured to adjust a volume of the earphone assembly.

13. The head mounted display device of claim 11, wherein touch electrodes of the first touch member is arranged more densely than touch electrodes of the second touch member.

14. The head mounted display device of claim 13, wherein the first touch member is circular in shape, the second touch member is annular in shape, and the first touch member is concentric with the second touch member.
